# EUROPÄISCHE PATENTSCHRIFT

(11) **EP 1 500 324 B1**
(45) Veröffentlichungstag und Bekanntmachung des Hinweises auf die Patenterteilung: **26.09.2007**
(21) Anmeldenummer: 04103390.3
(22) Anmeldetag: 15.07.2004
(51) Int. Cl.: A01F 7/06, A01F 12/18

(54) **Rotor für eine Gutbearbeitungseinrichtung eines Mähdreschers**
Rotor for a crop treatment device of a combine harvester
Rotor pour un dispositif de traitement de récolte d'une moissonneuse-batteuse

(30) Priorität: 29.07.2003 US 629298; 24.07.2003 US 626220
(43) Veröffentlichungstag der Anmeldung: 26.01.2005
(73) Patentinhaber: DEERE & COMPANY, Moline, Illinois 61265-8098 (US)
(72) Erfinder: Grywacheski, Sheldon Joseph, Eldridge, IA Iowa 52748 (US); Pope, Glenn, Viola, IL Illinois 61486 (US); Healy, Jason Michael, Port Byron, IL Illinois 61275 (US); Payne, Jeffrey Ray, Cordova, IL Illinois 61242 (US); Herlyn, Ryan Scott, Prophetstown, IL Illinois 61277 (US); Mackin, Ryan Patrick, Milan, IL Illinois 61264 (US); Ehrecke, Kevin Laverne, Davenport, IA Iowa 52804 (US)
(74) Vertreter: Holst, Sönke

(56) Entgegenhaltungen:
- US-A- 4 139 013
- US-A- 4 178 943
- US-A- 4 274 426

## Beschreibung

Die Erfindung betrifft einen Rotor für eine Gutbearbeitungseinrichtung eines Mähdreschers, mit einer Trommel, die einen rückwärtigen zylindrischen Abschnitt und einen vorderen kegelstumpfförmigen Abschnitt umfasst, wobei die Trommel an einem vorderen Bereich des kegelstumpfförmigen Abschnitts mit wenigstens einem Beschickungselement versehen ist.

Mähdrescher sind große Maschinen, die landwirtschaftlich angebautes Erntegut ernten, dreschen, trennen und reinigen. Das erhaltene saubere Korn wird in einem am Mähdrescher angeordneten Korntank gelagert. Es kann durch einen Entladeschneckenförderer aus dem Korntank auf einen Lastwagen, Anhänger oder in ein anderes Behältnis entladen werden.

Rotormähdrescher weisen einen oder zwei große Rotoren zum Dreschen und Trennen des Ernteguts auf. Bei den meisten Rotormähdreschern ist der Rotor oder sind die Rotoren entlang der Längsachse des Mähdreschers ausgerichtet. Diese Rotoren sind mit einem Beschickungsabschnitt zur Annahme des geernteten Materials, einem Dreschabschnitt zum Dreschen des Materials aus dem Beschickungsabschnitt und einem Trennabschnitt ausgestattet, um im vom Dreschabschnitt einlaufenden Erntegut enthaltene Körner freizusetzen.

Rotoren für Mähdrescher wurden in einer Vielzahl von Konfigurationen bereitgestellt, um die Effizienz bei der Ernte bei einer großen Vielzahl an Erntegutarten und -bedingungen zu optimieren. Es wurden beispielweise Änderungen an zylindrischen und kegelstumpfförmigen Trommelformen durchgeführt, wie sie in der US 4 139 013 A, US-A-4178943, US 4 266 560 A und US 4 274 426 A offenbart wurden.

Die der Erfindung zu Grunde liegende Aufgabe wird darin gesehen, einen verbesserten Rotor für einen Mähdrescher bereitzustellen.

Diese Aufgabe wird erfindungsgemäß durch die Lehre der Patentansprüche 1 und 6 gelöst, wobei in den weiteren Patentansprüchen Merkmale aufgeführt sind, die die Lösung in vorteilhafter Weise weiterentwickeln.

Die vorliegende Erfindung bezieht sich auf einen Rotor für einen Mähdrescher, bei dem sich sowohl ein Beschickungselement als auch ein Erntegutbearbeitungselement, insbesondere ein Dreschelement, auf einem gemeinsamen kegelstumpfförmigen Bereich der Trommel des Rotors befinden. Der Rotor ist in einem Beschickungsabschnitt, der am vorderen Bereich des kegelstumpfförmigen Abschnitts des Rotors liegt, mit einem vorzugsweise wendelförmigen Beschickungselement versehen. Unmittelbar stromab des Beschickungsabschnitts folgt der Erntegutbearbeitungsabschnitt mit einem oder mehreren Erntegutbearbeitungselementen. Weitere Erntegutbearbeitungselemente folgen vorzugsweise auf dem rückwärtigen, zylindrischen Abschnitt des Rotors.

In der Zeichnung ist ein nachfolgend näher beschriebenes Ausführungsbeispiel der Erfindung dargestellt. Es zeigt:
- Fig. 1: eine halbschematische Seitenansicht eines Rotormähdreschers, und

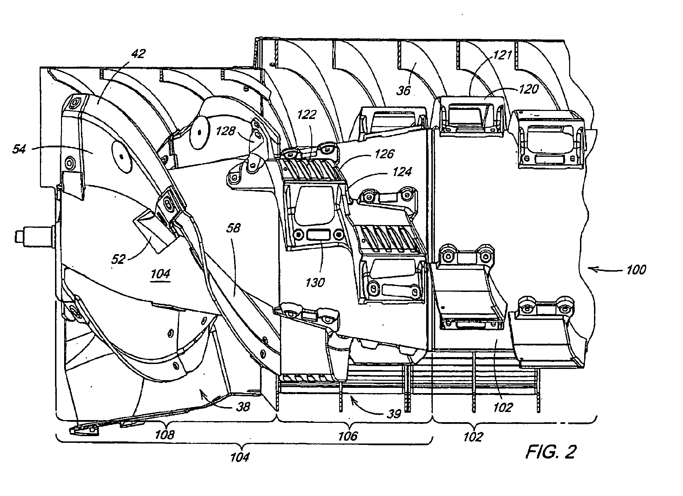

- Fig. 2: eine Seitenansicht des Beschickungs- und Dreschabschnitts des Rotors.

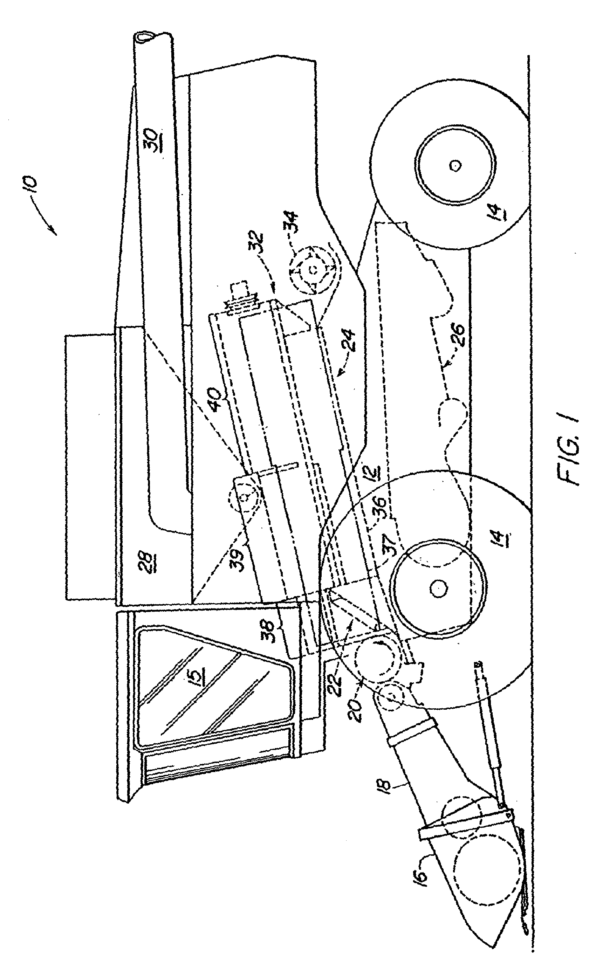

Die Figur 1 zeigt einen Mähdrescher 10, der einen tragenden Aufbau 12 mit im Eingriff mit dem Erdboden befindlichen Rädern 14 aufweist. Der Betrieb des Mähdreschers 10 wird von einer Bedienerkabine 15 aus gesteuert. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinrichtung 24 zu.

Die drehbare Gutbearbeitungseinrichtung 24 drischt und trennt das Erntegut. Korn und Spreu fallen durch Roste an der Unterseite der Gutbearbeitungseinrichtung 24 in ein Reinigungssystem 26. Das Reinigungssystem 26 entfernt die Spreu und führt das saubere Korn einem Elevator für sauberes Korn (nicht gezeigt) zu. Der Elevator für sauberes Korn legt das saubere Korn in einem Korntank 28 ab. Das saubere Korn im Korntank 28 kann durch einen Entladeschneckenförderer auf einen Kornwagen, Anhänger oder Lastwagen entladen werden. Gedroschenes und den Trennabschnitt verlassendes Stroh wird durch einen Auslass 32 aus der Erntegutbearbeitungseinheit 24 ausgestoßen und einer Fördertrommel 34 zugeführt. Die Fördertrommel 34 stößt das Stroh wiederum an der Rückseite des Mähdreschers 10 aus.

Die axiale Gutbearbeitungseinrichtung 24 umfasst ein Rotorgehäuse 36 und einen darin angeordneten Rotor 37. Der vordere Teil des Rotors 37 und des Rotorgehäuses 36 definieren den Beschickungsabschnitt 38 der Gutbearbeitungseinrichtung 24. In Längsrichtung stromab des Beschickungsabschnitts 38 sind der Dreschabschnitt 39 und der Trennabschnitt 40. Der Rotor 37 umfasst eine Trommel 100, an der Gutbearbeitungselemente für den Beschickungsabschnitt 38, den Dreschabschnitt 39 und den Trennabschnitt 40 befestigt sind. Die Trommel 100 umfasst einen rückwärtigen zylindrischen Abschnitt 102 und einen sich nach vorn erstreckenden, kegelstumpfförmigen Abschnitt 104. Die Oberfläche des kegelstumpfförmigen Abschnitts 104 ist in einen hinteren Bereich 106 in der Nähe des rückwärtigen zylindrischen Abschnitts 102 und einen vorderen Bereich 108 aufgeteilt.

Der Rotor 37 ist im Beschickungsabschnitt 38 mit wendelförmigen Beschickungselementen 42 versehen, die im vorderen Bereich 108 des kegelstumpfförmigen Abschnitts 102 der Trommel 100 angeordnet sind. Die wendelförmigen Beschickungselemente 42 greifen in das Erntegut ein, das von der Leittrommel 20 und dem Einlassübergangsabschnitt 22 einläuft. Die Beschickungselemente 42 setzen sich aus einem vorderen Abschnitt 54 und einem hinteren Abschnitt 58 zusammen. Der vordere Abschnitt 54 jedes Beschickungselements 42 ist durch Befestigungszusammenbauten 52 an der Trommel 100 angeschraubt. Der rückwärtige Bereich 58 jedes Beschickungselements 42 ist an einer Beschickungselementbefestigungseinrichtung 128 angeschraubt, die sich von einem benachbarten Dreschelement 120 erstreckt.

Unmittelbar stromab des Beschickungsabschnitts 38 befindet sich der Dreschabschnitt 39 der Gutbearbeitungseinrichtung 24. Im Dreschabschnitt 39 ist der Rotor 37 mit einer Anzahl an Dreschelementen 120 und 122 ausgestattet, um das vom Beschickungsabschnitt 38 herangeförderte Erntegut zu dreschen. Die Dreschelemente 122 sind an dem hinteren Bereich 106 des kegelstumpfförmigen Abschnitts 104, während die Dreschelemente 120 am rückwärtigen zylindrischen Abschnitt 102 der Trommel 100 angebracht sind. Die Dreschelemente 120 am zylindrischen Abschnitt 102 der Trommel 100 umfassen jeweils eine hohle Trägerstruktur mit einem Guteingriffsabschnitt 121.

Die am hinteren Bereich 106 des kegelstumpfförmigen Abschnitts 104 der Trommel 100 angeordneten Dreschelemente 122 sind zusammengesetzte Dreschelemente mit einer hohlen Trägerstruktur 124 mit zwei sich nach außen erstreckenden Guteingriffsabschnitten 126, die bei einer Drehung des Rotors 100 einen zylindrischen Weg überstreichen. Ihre äußeren Oberflächen sind somit parallel zur Achse des Rotors 37 orientiert. Von dem Dreschelement 122 erstreckt sich die oben erwähnte Beschickungselementbefestigungseinrichtung 128, an der der hintere Abschnitt 58 des benachbarten Beschickungselements 42 angebracht ist. Die Basis des Dreschelements 122 ist mit Befestigungsflanschen 130 versehen, durch die sich Befestigungsschrauben 57 erstrecken, um das Dreschelement 122 an der Trommel 100 zu befestigen.

Die Dreschelemente 122 sind in der dargestellten Ausführungsform mit zwei in einer versetzten Anordnung befestigten Guteingriffsabschnitten 126 gezeigt, sie könnten jedoch in einer Vielzahl möglicher Anordnungen mit einem oder mehreren Guteingriffsabschnitten ausgestattet sein. Die Guteingriffsabschnitte 126 sind außerdem mit Reibleisten ausgestattet, könnten aber auch mit anderen Oberflächenprofilen versehen sein, wie sie beispielsweise in der US 6 036 598 A offenbart sind.

Die sich nach außen erstreckenden Guteingriffsabschnitte 126 überstreichen in der dargestellten Ausführungsform einen zylindrischen Weg mit einem Durchmesser, der mit dem Durchmesser des Wegs übereinstimmt, der von dem Guteingriffsabschnitt 121 der Dreschelemente 120 an dem rückwärtigen zylindrischen Abschnitt 102 der Trommel 100 des Rotors 37 überstrichen wird. Die Guteingriffsabschnitte 126 der zusammengesetzten Dreschelemente 122 könnten jedoch auch eingerichtet sein, zylindrische Wege zu überstreichen, deren Durchmesser sich von denen der Guteingriffsabschnitte 121 der Dreschelemente 120 oder von benachbarten Guteingriffsabschnitten 126 des selben Dreschelementes 122 unterscheiden.

## Patentansprüche

1. Rotor (37) für eine Gutbearbeitungseinrichtung (24) eines Mähdreschers (10), mit einer Trommel (100), die einen rückwärtigen zylindrischen Abschnitt (102) und einen vorderen kegelstumpfförmigen Abschnitt (104) umfasst, wobei die Trommel (100) an einem vorderen Bereich (108) des kegelstumpfförmigen Abschnitts (104) mit wenigstens einem Beschickungselement (42) versehen ist, **dadurch gekennzeichnet, dass** an einem hinteren Bereich (106) des kegelstumpfförmigen Abschnitts (104) ein Erntegutbearbeitungselement zur Bearbeitung von Erntegut angeordnet ist.

2. Rotor (37) nach Anspruch 1, **dadurch gekennzeichnet, dass** am zylindrischen Abschnitt (102) ein Erntegutbearbeitungselement angeordnet ist.

3. Rotor (37) nach Anspruch 1 oder 2, **dadurch gekennzeichnet, dass** das Erntegutbearbeitungselement des zylindrischen Abschnitts (102) und/oder des kegelstumpfförmigen Abschnitts (104) einen sich nach außen erstreckenden Guteingriffsabschnitt (121, 126) aufweist, dessen Oberfläche bei einer Drehung des Rotors (37) einen zylindrischen Weg überstreicht.

4. Rotor (37) nach einem der vorhergehenden Ansprüche, **dadurch gekennzeichnet, dass** das Erntegutbearbeitungselement des zylindrischen Abschnitts (102) und/oder des kegelstumpfförmigen Abschnitts ein Dreschelement (120, 122) ist.

5. Rotor (37) nach einem der vorhergehenden Ansprüche, **dadurch gekennzeichnet, dass** das Beschickungselement (42) wendelförmig ist.

6. Gutbearbeitungseinrichtung (24) eines Mähdreschers (10) mit einem Rotor (100) nach einem der vorhergehenden Ansprüche.

## Claims

1. A rotor (37) for a crop processing device (24) of a combine (10), the rotor (37) comprising a drum (100) having a rear cylindrical portion (102) and a forward frusto-conical portion (104), wherein the drum (100) is in a front section (108) of the frusto-conical portion (104) provided with at least one infeed element (42), **characterized in that** a crop processing element for processing crop is located in a rear section (106) of the frusto-conical section (104).

2. A rotor (37) according to claim 1, **characterized in that** a crop processing element is located in the cylindrical portion (102).

3. A rotor (37) according to claim 1 or 2, **characterized in that** the crop processing element of the cylindrical section (102) and/or the frusto-conical section (104) has an outwardly extending crop engaging portion (121, 126), the surface of which sweeping a cylindrical path during rotation of the rotor (37).

4. Rotor (37) according to one of the preceding claims, **characterized in that** the crop processing element of the cylindrical section (102) and/or the frusto-conical section (104) is a threshing element (120, 122).

5. A rotor (37) according to one of the preceding claims, **characterized in that** the infeed element (42) is helical.

6. A crop processing device (24) of a combine (10) having a rotor (37) according to one of the preceding claims.

## Revendications

1. Rotor (37) pour un dispositif de traitement de récolte (24) d'une moissonneuse-batteuse (10), comportant un tambour (100), qui possède une partie cylindrique (102) arrière et une partie tronconique (104) avant, le tambour (100) étant muni d'au moins un élément de chargement (42) dans une zone avant (108) de la partie tronconique (104), **caractérisé en ce qu'**un élément de traitement de récolte destiné à traiter la masse végétale récoltée est monté dans une zone arrière (106) de la partie tronconique (104).

2. Rotor (37) selon la revendication 1, **caractérisé en ce qu'**un élément de traitement de récolte est monté sur la partie cylindrique (102).

3. Rotor (37) selon la revendication 1 ou 2, **caractérisé en ce que** l'élément de traitement de récolte de la partie cylindrique (102) et/ou de la partie tronconique (104) comporte une partie de saisie des végétaux (121, 126) qui s'étend vers l'extérieur et dont la surface suit une trajectoire cylindrique lors d'une rotation du rotor (37).

4. Rotor (37) selon l'une quelconque des revendications précédentes, **caractérisé en ce que** l'élément de traitement de récolte de la partie cylindrique (102) et/ou de la partie tronconique (104) est un élément de battage (120, 122).

5. Rotor (37) selon l'une quelconque des revendications précédentes, **caractérisé en ce que** l'élément de chargement (42) est hélicoïdal.

6. Dispositif de traitement de récolte (24) d'une moissonneuse-batteuse (10) comportant un rotor (37) selon l'une des revendications précédentes.
